# FASCICULE DE BREVET EUROPEEN

(11) **EP 2 858 844 B1**
(45) Date de publication et mention de la délivrance du brevet: **12.08.2020**
(21) Numéro de dépôt: 13729313.0
(22) Date de dépôt: 10.06.2013
(51) Int. Cl.: B60H 1/28, B60H 1/00

(54) **INSTALLATION DE CONDITIONNEMENT THERMIQUE D'UN HABITACLE D'UN VÉHICULE, NOTAMMENT UN VÉHICULE ÉLECTRIQUE**
WÄRMEKONDITIONIERUNGSVORRICHTUNG FÜR DEN FAHRGASTRAUM EINES KRAFTFAHRZEUGS, INSBESONDERE EINES ELEKTROFAHRZEUGS
THERMAL CONDITIONING APPARATUS FOR A PASSENGER COMPARTMENT OF A VEHICLE, IN PARTICULAR AN ELECTRIC VEHICLE

(30) Priorité: 08.06.2012 FR 1255400
(43) Date de publication de la demande: 15.04.2015
(73) Titulaire: Valeo Systemes Thermiques, 78321 Le Mesnil Saint Denis Cédex (FR)
(72) Inventeur: MARTINELL, Amanda, F-78640 Neauphle le Château (FR); AILLOUD, Fabrice, F-78280 Guyancourt (FR); VINCENT, Philippe, F-28230 Epernon (FR); LOUP, Didier, F-78310 Maurepas (FR)
(74) Mandataire: Tran, Chi-Hai
(86) Numéro de dépôt international: PCT/EP2013/061935
(87) Numéro de publication internationale: WO 2013/182710

(56) Documents cités:
- EP-A1- 2 236 327
- EP-A2- 0 846 580
- WO-A1-2012/049997
- DE-A1- 10 350 399
- DE-A1- 19 847 158
- FR-A3- 2 965 219
- US-A1- 2010 035 534

## Description

Le domaine technique de la présente invention est celui des installations de conditionnement thermique d'un habitacle d'un véhicule automobile.

Il est connu d'assurer la gestion thermique d'un habitacle d'un véhicule au moyen d'une installation de chauffage, ventilation et/ou climatisation agencée dans l'habitacle du véhicule. Une telle installation de chauffage, ventilation et/ou climatisation comprend un boîtier délimitant un canal de circulation d'un flux d'air destiné à être diffusé dans l'habitacle. Un échangeur thermique est disposé dans le canal de circulation afin de modifier la température du flux d'air avant d'être diffusé dans l'habitacle, en fonction d'une commande fixée par un occupant du véhicule. Un tel boîtier comprend également un système de distribution canalisant le flux d'air dans diverses zones de l'habitacle, notamment une zone disposée au niveau d'un pare-brise du véhicule et une zone inférieure, une zone médiane ou une zone supérieure de l'habitacle du véhicule.

Le boîtier de l'installation de chauffage, ventilation et/ou climatisation est installé dans l'habitacle, entre une planche du bord du véhicule et une paroi séparant l'habitacle et un compartiment moteur du véhicule.

Afin d'assurer le confort des occupants du véhicule, il est souhaitable que l'espace intérieur de l'habitacle soit le plus vaste possible. Toutefois, les dimensions générales du véhicule sont définies pour correspondre à des utilisations spécifiques. En particulier, pour un usage urbain, les dimensions du véhicule sont réduites.

Dans une telle configuration, pour maintenir un niveau de confort acceptable, notamment pour un véhicule à usage urbain, il est souhaitable de réduire l'encombrement de certains composants, par exemple la planche de bord. Une telle réduction dimensionnelle rend alors impossible le positionnement d'une installation de chauffage, ventilation et/ou climatisation telle que connue de l'art antérieur.

Le document FR 2 965 219 A3 divulgue une installation de conditionnement connue, une partie de l'installation étant agencée au sein de l'habitacle et l'autre partie au sein du compartiment moteur.L'objectif de la présente invention est de réduire l'encombrement d'une telle installation.

De manière à prendre en compte les inconvénients et contraintes détaillés précédemment, la présente invention a donc pour objet une installation de conditionnement thermique suivant les caractéristiques de la revendication 1.

Préférentiellement, le boîtier d'entrée d'air comporte au moins une entrée d'air extérieur, pour l'admission d'un flux d'air extérieur dans le module de traitement thermique, et au moins une entrée d'air intérieur, pour l'admission d'un flux d'air intérieur dans le module de traitement thermique.

En particulier, le boîtier d'entrée d'air peut comporter deux entrées d'air extérieur et une unique entrée d'air intérieur. Avantageusement, dans une telle configuration, l'unique entrée d'air intérieur est disposée entre les deux entrées d'air extérieur, selon une direction transversale.

De plus, le boîtier d'entrée d'air comporte au moins un moyen de sélection, apte à autoriser une admission du flux d'air intérieur et/ou du flux d'air extérieur dans le module de traitement thermique.

Préférentiellement, le moyen de sélection est constitué par au moins un volet, apte à permettre l'ouverture et/ou la fermeture de l'entrée d'air extérieur et/ou de l'entrée d'air intérieur.

Selon un exemple particulier de réalisation, le moyen de sélection comporte au moins un volet d'entrée d'air extérieur, apte à ouvrir, respectivement fermer, l'entrée d'air extérieur, et au moins un volet d'entrée d'air intérieur, apte à ouvrir, respectivement fermer, l'entrée d'air intérieur.

Avantageusement, le volet d'entrée d'air extérieur et le volet d'entrée d'air intérieur sont agencés sur un même axe de rotation.

Selon une variante de réalisation, le moyen de sélection comporte deux volets d'entrée d'air extérieur et un unique volet d'entrée d'air intérieur. Avantageusement, dans une telle configuration, l'unique volet d'entrée d'air intérieur est disposé entre les deux volets d'entrée d'air extérieur selon une direction transversale.

Préférentiellement, le volet d'entrée d'air extérieur et le volet d'entrée d'air intérieur sont des volets de type "papillon".

Par ailleurs, selon un mode particulier de réalisation, le boîtier d'entrée d'air comporte au moins une cloison interne divisant le volume intérieur du boîtier d'entrée d'air en une chambre d'admission d'air intérieur et une chambre d'admission d'air extérieur.

En particulier, le boîtier d'entrée d'air comporte deux cloisons internes divisant le volume intérieur du boîtier d'entrée d'air en deux chambres d'admission d'air extérieur et une unique chambre d'admission d'air intérieur. Avantageusement, dans une telle configuration, l'unique chambre d'admission d'air intérieur est disposée entre les deux chambres d'admission d'air extérieur selon une direction transversale.

Un tout premier avantage selon l'invention réside dans la possibilité d'agencer le boîtier d'entrée d'air en partie supérieure de l'installation de conditionnement thermique afin de réduire l'encombrement général de l'installation de conditionnement thermique, et ainsi agrandir l'espace disponible dans l'habitacle, au profit des occupants du véhicule.

Un autre avantage réside dans l'agencement de l'entrée d'air intérieur entre les deux entrées d'air extérieur. Une telle disposition permet que l'entrée d'air intérieur soit disposée à proximité d'une paroi de séparation entre un compartiment avant et un habitacle du véhicule.

Enfin, un autre avantage encore réside dans l'agencement d'un moyen de sélection, apte à autoriser une admission d'un flux d'air intérieur et/ou d'un flux d'air extérieur, qui soit simple et compact.

Bien entendu les différentes caractéristiques, variantes et/ou formes de réalisation de la présente invention peuvent être associées les unes avec les autres selon diverses combinaisons dans la mesure où elles ne sont pas incompatibles ou exclusives les unes des autres.

La présente invention sera mieux comprise et d'autres caractéristiques et avantages apparaîtront encore à la lecture de la description détaillée qui suit comprenant des modes de réalisation donnés à titre illustratif en référence avec les figures annexées, présentés à titre d'exemples non limitatifs, qui pourront servir à compléter la compréhension de la présente invention et l'exposé de sa réalisation et, le cas échéant, contribuer à sa définition, sur lesquelles :
- la figure 1 est une vue partiellement éclatée en perspective d'une installation de conditionnement thermique selon la présente invention,
- la figure 2 est une vue en perspective de l'installation de conditionnement thermique de la figure 1,
- la figure 3 est une vue en perspective d'un module de traitement thermique d'une installation de conditionnement thermique selon la présente invention,
- la figure 4 est une vue en perspective éclatée du module de traitement thermique de la figure 3, et
- les figures 5a, 5b et 5c sont des vues en coupe d'une partie supérieure du module de traitement thermique de la figure 3 selon diverses configurations.

Il est à noter que, sur les figures, les éléments structurels et/ou fonctionnels communs aux différents modes de réalisation peuvent présenter les mêmes références. Ainsi, sauf mention contraire, de tels éléments disposent de propriétés structurelles, dimensionnelles et matérielles identiques.

Dans la présente description, il est fait référence à un repère orthonormé x, y, z, dans lequel la direction x définit une direction longitudinale, la direction y définit une direction verticale et la direction z définit une direction transversale.

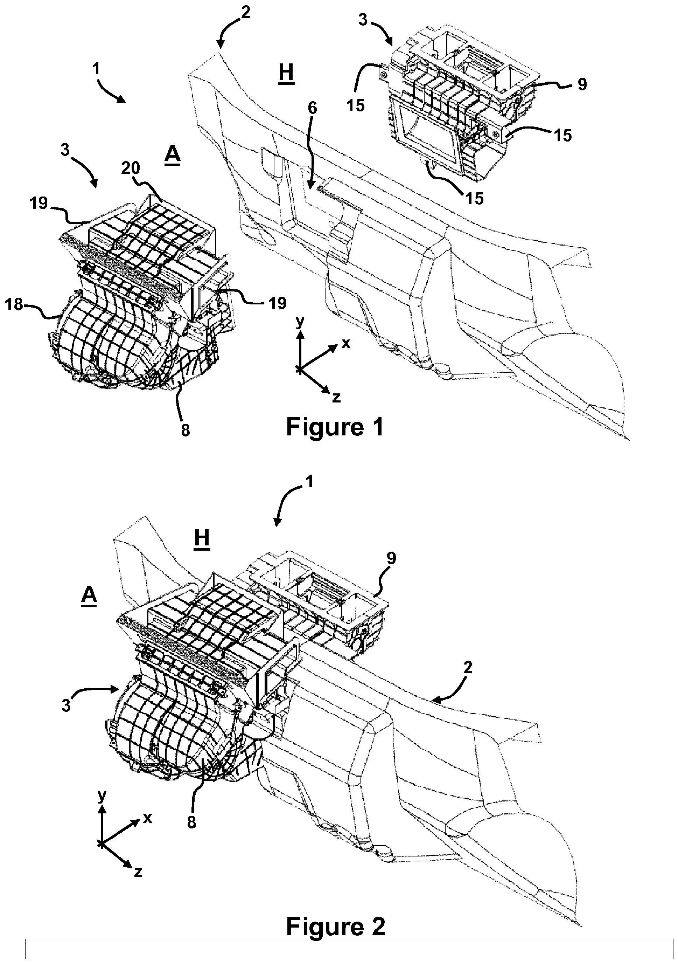

Les figures 1 et 2 sont, respectivement, des vues en perspective d'un système de conditionnement thermique 1 d'un habitacle, notamment d'un véhicule électrique.

Un tel système de conditionnement thermique 1 comprend, d'une part, une paroi de séparation 2 séparant un habitacle H et un compartiment avant A du véhicule, et, d'autre part, une installation de conditionnement thermique 3 permettant une mise au point aérothermique d'un flux d'air destiné à être diffusé dans l'habitacle H.

Plus particulièrement, la figure 1 présente le système de conditionnement thermique 1 préalablement à l'assemblage de la paroi de séparation 2 et de l'installation de conditionnement thermique 3. La figure 2 présente le système de conditionnement thermique 1 après l'assemblage de la paroi de séparation 2 et de l'installation de conditionnement thermique 3.

La paroi de séparation 2 prend, par exemple, la forme d'une tôle s'étendant sensiblement verticalement entre un plancher et un pare-brise avant (non représentés) du véhicule. Le compartiment avant A du véhicule peut par exemple recevoir un ou plusieurs composants d'une chaîne de propulsion du véhicule, comme par exemple un moteur électrique, un onduleur, des calculateurs, etc...

La paroi de séparation 2 comprend également au moins un passage 6 contre lequel l'installation de conditionnement thermique 3 vient en appui.

Selon la présente invention, l'installation de conditionnement thermique 3 est constituée de deux parties distinctes. D'une part, une première partie est formée par un module de traitement thermique 8, permettant la mise au point aérothermique du flux d'air destiné à être diffusé dans l'habitacle H. D'autre part, une deuxième partie est formée par un module de distribution 9 du flux d'air, permettant de distribuer le flux d'air issu du module de traitement thermique 8 dans diverses zones de l'habitacle H, en particulier une zone localisée au niveau d'un pare-brise du véhicule, une zone localisée en partie inférieure de l'habitacle H, une zone en partie médiane d'une planche de bord du véhicule ou une zone latérale de l'habitacle H du véhicule.

Le module de traitement thermique 8 et le module de distribution 9 sont deux sous-ensembles distincts et disjoints de l'installation de conditionnement thermique 3. Plus particulièrement, le module de traitement thermique 8 et le module de distribution 9 sont uniquement reliés entre eux par une fixation au niveau du passage 6. Toutefois, le module de traitement thermique 8 et le module de distribution 9 sont en communication aéraulique, par l'intermédiaire du passage 6, de sorte que le flux d'air dont la mise au point aérothermique est assurée par le module de traitement thermique 8 circule dans le module de distribution 9 avant de rejoindre l'habitacle H.

Selon la présente invention, le module de traitement thermique 8 est disposé dans le compartiment avant A et le module de distribution 9 est disposé dans l'habitacle H. De manière complémentaire, le module de traitement thermique 8 s'étend entièrement, notamment exclusivement, dans le compartiment avant A. De même, le module de distribution 9 s'étend entièrement, et notamment exclusivement, dans l'habitacle H.

Le module de traitement thermique 8 peut être rendu solidaire de la paroi de séparation 2, à l'aide de moyens de solidarisation dédiés à cet effet. Une telle solidarisation est effectuée au droit du passage 6 permettant une communication aéraulique entre le module de traitement thermique 8 et le module de distribution 9. Ainsi, le module de traitement thermique 8 ferme le passage 6 du côté du compartiment avant A.

Le module de distribution 9 peut également être solidaire de la paroi de séparation 2, à l'aide de moyens de solidarisation propres, ou en utilisant les moyens de solidarisation permettant de fixer le module de traitement thermique 8 sur la paroi de séparation 2. Une telle solidarisation du module de distribution 9 est effectuée au droit du passage 6, permettant la communication aéraulique entre le module de traitement thermique 8 et le module de distribution 9. Ainsi, le module de distribution 9 ferme le passage 6 du côté de l'habitacle H.

Avantageusement, selon un mode particulier de réalisation non représenté, la paroi de séparation 2 comprend deux passages 6, afin de permettre des liaisons aérauliques entre le module de traitement thermique 8 et le module de distribution 9 par deux flux d'air distincts issus du module de traitement thermique 8.

Le module de traitement thermique 8 peut également comporter une ou plusieurs pattes de fixations similaires aux pattes de fixations 15 permettant de solidariser le module de distribution 9 et/ou le module de traitement thermique 8 avec la paroi de séparation 2.

Le module de traitement thermique 8 est la partie de l'installation de conditionnement thermique 3 assurant la mise en mouvement du flux d'air destiné à être diffusé dans l'habitacle H, par exemple par l'intermédiaire d'un groupe moto-ventilateur 18. De plus, le module de traitement thermique 8 assure également la mise au point thermique du flux d'air destiné à être diffusé dans l'habitacle H, notamment en le réchauffant et/ou en le refroidissant. A cet effet, le module de traitement thermique 8 comprend au moins un premier échangeur de chaleur. Avantageusement, le module de traitement thermique 8 comprend également un deuxième échangeur de chaleur.

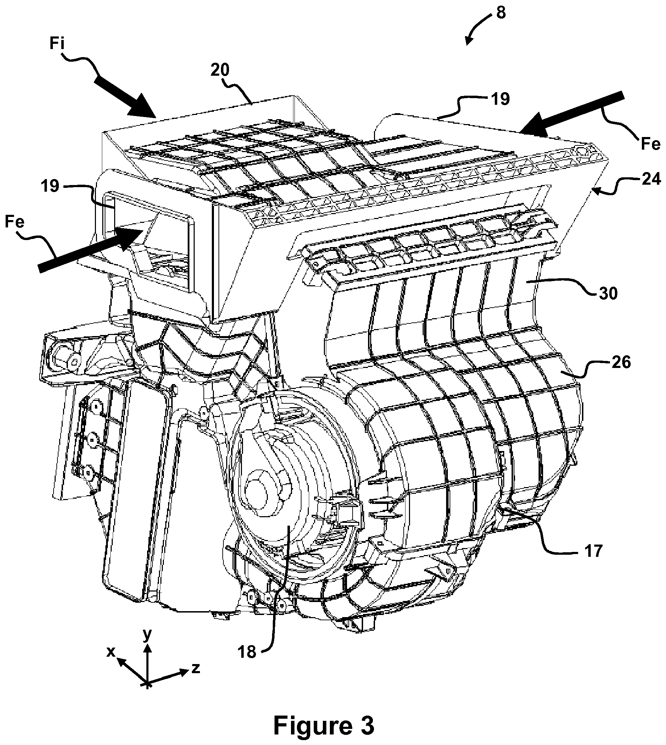

La figure 3 est une vue en perspective du module de traitement thermique 8 de l'installation de conditionnement thermique 3 selon la présente invention.

Le module de traitement thermique 8 comprend un boîtier de traitement thermique 17. Le boîtier de traitement thermique 17 comprend au moins le groupe moto-ventilateur 18 agencé pour mettre en circulation le flux d'air dans l'installation de conditionnement thermique 3. Un tel groupe moto-ventilateur 18 comprend par exemple un moteur électrique entraînant en rotation une turbine radiale disposée dans le boîtier de traitement thermique 17 délimitant le module de traitement thermique 8.

Selon la présente invention, le flux d'air pénètre dans le module de traitement thermique 8 par au moins une entrée d'air, avantageusement au moins une entrée d'air extérieur 19 et au moins une entrée d'air intérieur 20, et en sort par au moins une sortie d'air traité. En conséquence, un flux d'air extérieur Fe est admis par l'entrée d'air extérieur 19 dans le module de traitement thermique 8 et un flux d'air intérieur Fi est admis par l'entrée d'air intérieur 20 dans le module de traitement thermique 8.

Avantageusement, selon un mode particulier de réalisation non représenté, la paroi de séparation 2 comporte une ouverture complémentaire, distincte du passage 6 assurant la liaison aéraulique entre le module de traitement thermique 8 et le module de distribution 9. Une telle ouverture complémentaire permet l'introduction du flux d'air intérieur Fi en provenance de l'habitacle H dans le module de traitement thermique 8.

De plus, le boîtier de traitement thermique 17 comporte un boîtier d'entrée d'air 24. Le boîtier d'entrée d'air 24 comprend l'entrée d'air permettant l'admission du flux d'air, notamment le flux d'air intérieur Fi et/ou le flux d'air extérieur Fe, dans le module de traitement thermique 8. Préférentiellement, le boîtier d'entrée d'air 24 comporte au moins l'entrée d'air extérieur 19 et l'entrée d'air intérieur 20.

Le flux d'air extérieur Fe est un flux d'air en provenance de l'extérieur de l'habitacle H. On parle également de flux d'air frais. Le flux d'air intérieur Fi est un flux d'air en provenance de l'habitacle H. On parle également de flux d'air recirculé.

Selon un exemple particulier de réalisation, le boîtier d'entrée d'air 24 comporte deux entrées d'air extérieur 19 et une unique entrée d'air intérieur 20. Plus spécifiquement, le boîtier d'entrée d'air 24 comprend deux entrées d'air extérieur 19 disposées latéralement de chaque côté du boîtier de traitement thermique 17 et une entrée d'air intérieur 20 disposée entre les deux entrées d'air extérieur 19, selon la direction transversale z.

Le module de traitement thermique 8 est donc parcouru par un flux d'air constitué intégralement par le flux d'air intérieur Fi, ou intégralement par le flux d'air extérieur Fe ou par un mélange, en proportions variables, du flux d'air intérieur Fi et du flux d'air extérieur Fe.

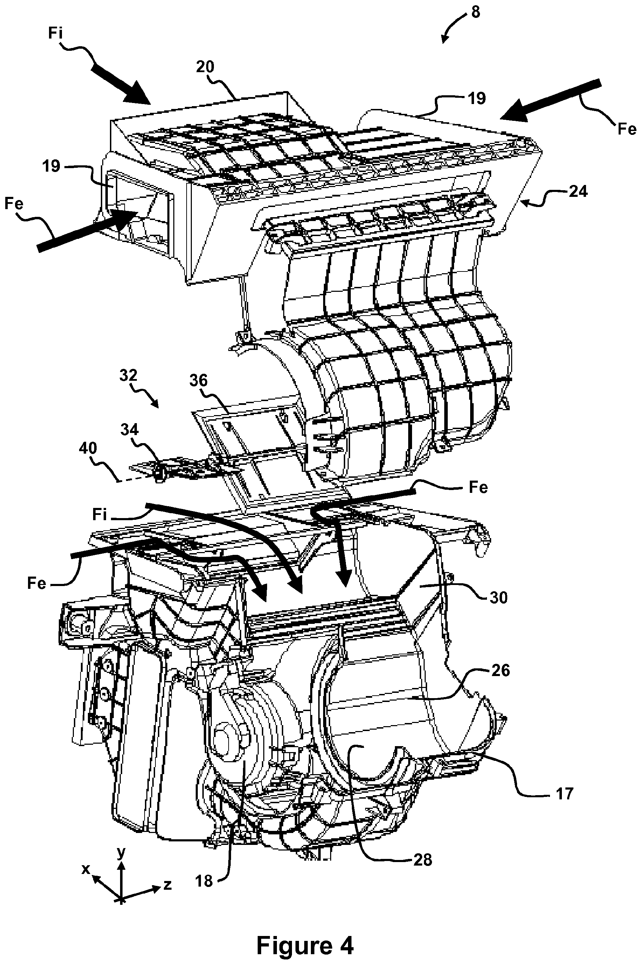

Ainsi, le boîtier d'entrée d'air 24 permet de collecter et canaliser le flux d'air intérieur Fi et/ou le flux d'air extérieur Fe vers un canal d'admission d'air 26. Le canal d'admission d'air 26 permet d'assurer une liaison aéraulique entre le boîtier d'entrée d'air 24 et du groupe moto-ventilateur 18. A cet effet, le canal d'admission d'air 26 est connecté à un orifice d'admission 28 du groupe moto-ventilateur 18, visible sur la figure 4. Par suite, le flux d'air est mis en mouvement par le groupe moto-ventilateur 18 afin de traverser le module de traitement thermique 8 et le module de distribution 9, avant d'être diffusé dans les diverses zones de l'habitacle H.

De façon complémentaire, le module de traitement thermique 8 peut comprendre un emplacement 30 pour un dispositif de filtration, notamment formé par un filtre, afin de traiter qualitativement le flux d'air intérieur Fi et/ou le flux d'air extérieur Fe pénétrant dans le module de traitement thermique 8.

Avantageusement, un tel dispositif de filtration est agencé en aval de l'entrée d'air, notamment en aval de l'entrée d'air extérieur 19 et de l'entrée d'air intérieur 20, particulièrement en aval des entrées d'air extérieur 19 et de l'entrée d'air intérieur 20, et en amont du groupe moto-ventilateur 18.

Selon un exemple de réalisation, le dispositif de filtration est disposé dans le canal d'admission d'air 26 et occupe l'intégralité d'une section transversale du canal d'admission d'air 26 afin que la totalité du flux d'air intérieur Fi et/ou du flux d'air extérieur Fe pénétrant dans le module de traitement thermique 8 soit traité qualitativement.

Alternativement, le dispositif de filtration peut être agencé uniquement en aval de l'entrée d'air extérieur 19, respectivement des entrées d'air extérieur 19, afin de filtrer uniquement le flux d'air extérieur Fe. Dans un tel agencement, le flux d'air intérieur Fi n'est pas filtré préalablement à une admission dans le groupe moto-ventilateur 18.

Selon un autre exemple de réalisation, le dispositif de filtration est disposé dans le boîtier d'entrée d'air 24. Un tel agencement est particulièrement adapté lorsque le dispositif de filtration est agencé uniquement en aval de l'entrée d'air extérieur 19, respectivement des entrées d'air extérieur 19.

Le module de traitement thermique 8 permet d'assurer le traitement aérothermique et la mise au point thermique du flux d'air destiné à être diffusé dans l'habitacle H en modifiant la température de celui-ci. Pour ce faire, le module de traitement thermique 8 comporte au moins un premier échangeur de chaleur, tel qu'un radiateur électrique comportant des résistances électrique ou un échangeur thermique parcouru par un fluide caloporteur, apte à assurer un échange thermique avec le flux d'air afin de le réchauffer ou de le refroidir.

On se reporte dorénavant à la figure 4 qui est une vue en perspective éclatée du module de traitement thermique 8 de la figure 3.

Le module de traitement thermique 8 comprend également un moyen de sélection 32 apte à autoriser une admission du flux d'air admis dans le boîtier de traitement thermique 17 à partir de l'entrée d'air extérieur 19 et/ou de l'entrée d'air intérieur 20. Tel que mentionné précédemment, par l'intermédiaire du moyen de sélection 32, il est ainsi possible d'autoriser une admission en flux d'air intérieur Fi et/ou en flux d'air extérieur Fe dans le module de traitement thermique 8. Ainsi, le flux d'air peut donc être constitué exclusivement du flux d'air intérieur Fi, ou exclusivement du flux d'air extérieur Fe ou d'un mélange, en proportions variables, du flux d'air intérieur Fi et du flux d'air extérieur Fe.

Le moyen de sélection 32 est constitué par au moins un volet, apte à permettre l'ouverture et/ou la fermeture, totale ou partielle, de l'entrée d'air extérieur 19 et de l'entrée d'air intérieur 20.

Le moyen de sélection 32 peut comporter au moins un volet d'entrée d'air extérieur 34, apte à ouvrir, respectivement fermer, l'entrée d'air extérieur 19, et au moins un volet d'entrée d'air intérieur 36, apte à ouvrir, respectivement fermer, l'entrée d'air intérieur 20.

Préférentiellement, le moyen de sélection 32 comporte deux volets d'entrée d'air extérieur 34 aptes à ouvrir, respectivement fermer, les deux entrées d'air extérieur 19, et un unique volet d'entrée d'air intérieur 36, apte à ouvrir, respectivement fermer, l'unique entrée d'air intérieur 20.

Un mode particulier de réalisation de la présente invention est tel que le moyen de sélection 32 comprend au moins un volet d'entrée d'air extérieur 34 et au moins un volet d'entrée d'air intérieur 36 agencés sur un même axe de rotation 40. Ainsi, l'ouverture et la fermeture de l'entrée d'air extérieur 19 et de l'entrée d'air intérieur 20 se fait par rotation simultanée du volet d'entrée d'air extérieur 34 et du volet d'entrée d'air intérieur 36 autour de l'axe de rotation 40.

Selon une variante de réalisation, le moyen de sélection 32 comprend deux volets d'entrée d'air extérieur 34 et un unique volet d'entrée d'air intérieur 36 agencés sur le même axe de rotation 40. Plus particulièrement, l'unique volet d'entrée d'air intérieur 36 est disposé entre les deux volets d'entrée d'air extérieur 34, selon la direction transversale z.

Selon diverses formes de réalisation, le volet d'entrée d'air extérieur 34, respectivement le volet d'entrée d'air intérieur 36, peut être un volet de type "tambour", ou un volet de type "papillon" ou un volet de type "drapeau". De façon complémentaire, le volet d'entrée d'air extérieur 34 et le volet d'entrée d'air intérieur 36 peuvent également être de forme respective différente.

Avantageusement, le volet d'entrée d'air extérieur 34, respectivement le volet d'entrée d'air intérieur 36, est un volet de type "papillon". Préférentiellement, le volet d'entrée d'air extérieur 34 et le volet d'entrée d'air intérieur 36 sont des volets de type "papillon"

Selon la présente invention, le boîtier d'entrée d'air 24 et agencée dans une partie supérieure du boîtier de traitement thermique 17 délimitant le module de traitement thermique 8. Par ailleurs, le groupe moto-ventilateur 18 est dans une partie inférieure du boîtier de traitement thermique 17 délimitant le module de traitement thermique 8. Ainsi, le boîtier d'entrée d'air 24 est agencé au dessus du groupe moto-ventilateur 18, selon la direction verticale y. En particulier, le boîtier d'entrée d'air 24 est agencé intégralement au dessus du groupe moto-ventilateur 18. Préférentiellement, le boîtier d'entrée d'air 24 est disposé au droit du groupe moto-ventilateur 18.

Un tel agencement définit une circulation du flux d'air dans le module de traitement thermique 8 selon laquelle le flux d'air entre dans le module de traitement thermique 8 par le boîtier d'entrée d'air 24, selon une direction sensiblement horizontale, parallèle à la direction longitudinale x. Par suite, le flux d'air est canalisé par le canal d'admission d'air 26 vers le groupe moto-ventilateur 18, selon une direction inclinée vers le bas par rapport à la direction sensiblement horizontale du flux d'air entrant dans le module de traitement thermique 8, c'est-à-dire inclinée par rapport à la direction longitudinale x. Enfin, le flux d'air parcourt la partie inférieure du module de traitement thermique 8 depuis le groupe moto-ventilateur 18 vers la sortie d'air traité du module de traitement thermique 8, préférentiellement selon une direction sensiblement horizontale, c'est-à-dire sensiblement parallèle à la direction longitudinale x. Ainsi défini, la circulation du flux d'air dans le module de traitement thermique 8 est en forme de "U".

Selon la présente invention, dans la direction transversale z, le module de traitement thermique 8 est intégralement contenu entre un premier plan vertical et un deuxième plan vertical, parallèles entre eux et respectivement perpendiculaires à la direction transversale z. Préférentiellement, le premier plan vertical et le deuxième plan vertical sont positionnés respectivement au niveau des entrées d'air extérieur 19. En conséquence, l'ensemble des composants du module de traitement thermique 8 sont disposés afin d'être contenus dans l'espace défini entre le premier plan vertical et le deuxième plan vertical.

Selon un mode complémentaire ou alternatif, les entrées d'air extérieur 19 sont agencées respectivement dans le premier plan vertical et le deuxième plan vertical, perpendiculaires à la direction transversale z. Par ailleurs, l'entrée d'air intérieur 20 est agencée dans un troisième plan vertical, ou sensiblement vertical, perpendiculaire à la direction longitudinale x.

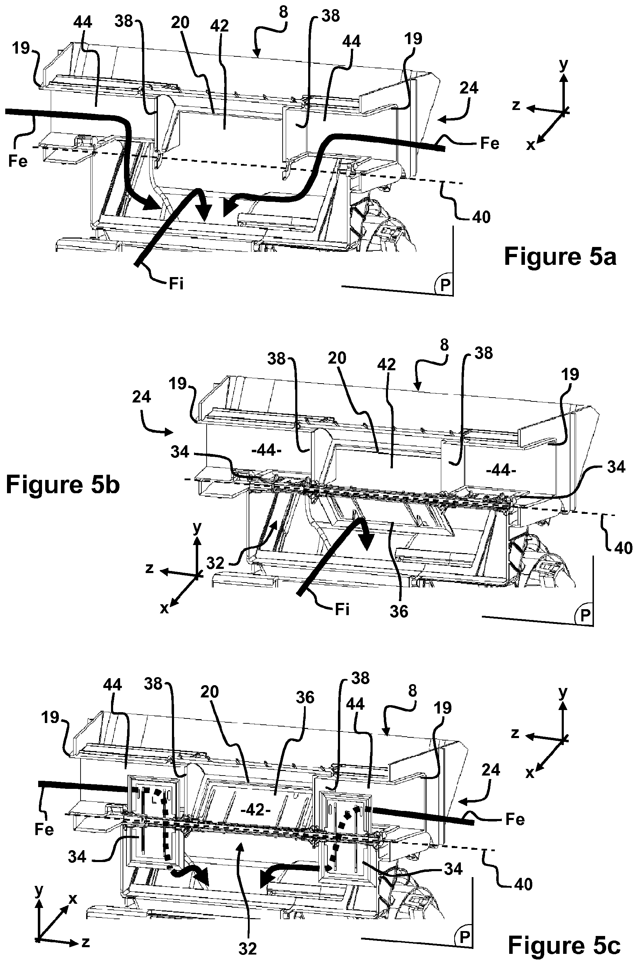

Enfin, il est fait référence aux figures 5a, 5b et 5c qui sont des vues en coupe du boîtier d'entrée d'air 24. Sur l'ensemble des figures 5a, 5b et 5c, la coupe est selon un plan P vertical passant par l'axe de rotation 40 du moyen de sélection 32. Le plan P est donc perpendiculaire à la direction longitudinale x.

Notamment, la figure 5a est une vue en coupe dans laquelle le moyen de sélection 32 a été retiré. Par ailleurs, la figure 5b est une vue en coupe dans laquelle le moyen de sélection 32 est dans une position dite "recyclage" permettant une admission uniquement du flux d'air intérieur Fi. Enfin, la figure 5c est une vue en coupe dans laquelle le moyen de sélection 32 est dans une position dite "air frais" permettant une admission uniquement du flux d'air extérieur Fe. Bien évidemment, le moyen de sélection 32 peut prendre diverses positions intermédiaires entre la position dite "recyclage" et la position dite "air frais" afin de permettre une admission d'un mélange du flux d'air intérieur Fi et du flux d'air extérieur Fe, en proportions variables selon la rotation du moyen de sélection 32.

Par ailleurs, suivant l'invention, le boîtier d'entrée d'air 24 comporte au moins une cloison interne 38 divisant le volume intérieur du boîtier d'entrée d'air 24 en une chambre d'admission d'air intérieur 42 et une chambre d'admission d'air extérieur 44.
Selon une variante de réalisation, le boîtier d'entrée d'air 24 comporte deux cloisons internes 38 divisant le volume intérieur du boîtier d'entrée d'air 24 en deux chambres d'admission d'air extérieur 44 et une unique chambre d'admission d'air intérieur 42. Avantageusement, l'unique chambre d'admission d'air intérieur 42 est bordée de part et d'autre par les deux cloisons internes 38 et est comprise entre les deux chambres d'admission d'air extérieur 44.
Bien évidemment, l'invention n'est pas limitée aux modes de réalisation décrits précédemment et fournis uniquement à titre d'exemple. Elle englobe diverses modifications, formes alternatives et autres variantes que pourra envisager l'homme du métier dans le cadre de la présente invention telle que définie par les revendications, et notamment toutes combinaisons des différents modes de fonctionnement décrits précédemment, pouvant être pris séparément ou en association.

## Revendications

1. Installation de conditionnement thermique (3) pour un véhicule automobile, apte à permettre une mise au point aérothermique d'un flux d'air destiné à être diffusé dans un habitacle (H) du véhicule, comprenant au moins un module de traitement thermique (8), apte à traiter thermiquement le flux d'air, comportant au moins un boîtier d'entrée d'air (24) pour l'admission du flux d'air dans le module de traitement thermique (8) et un groupe moto-ventilateur (18) pour la mise en circulation du flux d'air dans le module de traitement thermique (8), et un module de distribution (9) du flux d'air permettant de distribuer le flux d'air issu du module de traitement thermique (8) dans diverses zones de l'habitacle (H), le module de traitement thermique (8) étant destiné à être disposé dans un compartiment avant (A) du véhicule et le module de distribution (9) étant destiné à être disposé dans l'habitacle (H), le module de traitement thermique (8) et le module de distribution étant deux sous-ensembles distincts et disjoints, **caractérisée en ce que** le boîtier d'entrée d'air (24) est agencé au dessus du groupe moto-ventilateur (18), selon une direction verticale (y) en référence à un repère orthonormé (x, y, z), dans lequel la direction (x) définit une direction longitudinale, la direction (y) définit une direction verticale et la direction (z) définit une direction transversale, et **en ce que** le boîtier d'entrée d'air (24) comporte au moins une cloison interne (38) divisant le volume intérieur du boîtier d'entrée d'air (24) en une chambre d'admission d'air extérieur (44) et une chambre d'admission d'air intérieur (42).

2. Installation de conditionnement thermique (3) selon la revendication 1, dans laquelle le boîtier d'entrée d'air (24) comporte au moins une entrée d'air extérieur (19), pour l'admission d'un flux d'air extérieur (Fe) dans le module de traitement thermique (8), et au moins une entrée d'air intérieur (20), pour l'admission d'un flux d'air intérieur (Fi) dans le module de traitement thermique (8).

3. Installation de conditionnement thermique (3) selon la revendication 2, dans laquelle le boîtier d'entrée d'air (24) comporte deux entrées d'air extérieur (19) et une unique entrée d'air intérieur (20).

4. Installation de conditionnement thermique (3) selon la revendication 3, dans laquelle l'unique entrée d'air intérieur (20) est disposée entre les deux entrées d'air extérieur (19), selon une direction transversale (z).

5. Installation de conditionnement thermique (3) selon l'une quelconque des revendications 2 à 4, dans laquelle le boîtier d'entrée d'air (24) comporte au moins un moyen de sélection (32), apte à autoriser une admission du flux d'air intérieur (Fi) et/ou du flux d'air extérieur (Fe) dans le module de traitement thermique (8).

6. Installation de conditionnement thermique (3) selon la revendication 5, dans laquelle le moyen de sélection (32) est constitué par au moins un volet (34, 36), apte à permettre l'ouverture et/ou la fermeture de l'entrée d'air extérieur (19) et/ou de l'entrée d'air intérieur (20).

7. Installation de conditionnement thermique (3) selon la revendication 6, dans laquelle le moyen de sélection (32) comporte au moins un volet d'entrée d'air extérieur (34), apte à ouvrir, respectivement fermer, l'entrée d'air extérieur (19), et au moins un volet d'entrée d'air intérieur (36), apte à ouvrir, respectivement fermer, l'entrée d'air intérieur (20).

8. Installation de conditionnement thermique (3) selon la revendication 7, dans laquelle le volet d'entrée d'air extérieur (34) et le volet d'entrée d'air intérieur (36) sont agencés sur un même axe de rotation (40).

9. Installation de conditionnement thermique (3) selon la revendication 7 ou 8, dans laquelle le moyen de sélection (32) comporte deux volets d'entrée d'air extérieur (34) et un unique volet d'entrée d'air intérieur (36).

10. Installation de conditionnement thermique (3) selon la revendication 9, dans laquelle l'unique volet d'entrée d'air intérieur (36) est disposé entre les deux volets d'entrée d'air extérieur (34) selon une direction transversale (z).

11. Installation de conditionnement thermique (3) selon l'une quelconques des revendications 7 à 10, dans laquelle le volet d'entrée d'air extérieur (34) et le volet d'entrée d'air intérieur (36) sont des volets de type "papillon".

12. Installation de conditionnement thermique (3) selon l'une quelconques des revendications précédentes, dans laquelle le boîtier d'entrée d'air (24) comporte deux cloisons internes (38) divisant le volume intérieur du boîtier d'entrée d'air (24) en deux chambres d'admission d'air extérieur (44) et une unique chambre d'admission d'air intérieur (42).

13. Installation de conditionnement thermique (3) selon la revendication 12, dans laquelle l'unique chambre d'admission d'air intérieur (42) est disposée entre les deux chambres d'admission d'air extérieur (44) selon une direction transversale (z).

## Patentansprüche

1. Klimatisierungsanlage (3) für ein Kraftfahrzeug, die eine aerothermische Einstellung eines Luftstroms erlauben kann, der dazu bestimmt ist, in einen Innenraum (H) des Fahrzeugs abgegeben zu werden, die mindestens ein Wärmebehandlungsmodul (8), das den Luftstrom wärmebehandeln kann, das mindestens ein Lufteingangsgehäuse (24) zum Ansaugen des Luftstroms in das Wärmebehandlungsmodul (8) und eine Gebläseeinheit (18) zum Umwälzen des Luftstroms im Wärmebehandlungsmodul (8) aufweist, und ein Verteilungsmodul (9) des Luftstroms enthält, das es ermöglicht, den vom Wärmebehandlungsmodul (8) stammenden Luftstrom in verschiedenen Zonen des Innenraums (H) zu verteilen, wobei das Wärmebehandlungsmodul (8) dazu bestimmt ist, in einem vorderen Raum (A) des Fahrzeugs angeordnet zu werden, und das Verteilungsmodul (9) dazu bestimmt ist, in der Fahrgastzelle (H) angeordnet zu werden, wobei das Wärmebehandlungsmodul (8) und das Verteilungsmodul zwei unterschiedliche und getrennte Teileinheiten sind, **dadurch gekennzeichnet, dass** das Lufteingangsgehäuse (24) über der Gebläseeinheit (18) gemäß einer senkrechten Richtung (y) bezüglich eines orthonormierten Bezugssystems (x, y, z) angeordnet ist, in dem die Richtung (x) eine Längsrichtung definiert, die Richtung (y) eine senkrechte Richtung definiert und die Richtung (z) eine Querrichtung definiert, und dass das Lufteingangsgehäuse (24) mindestens eine innere Trennwand (38) aufweist, die das Innenvolumen des Lufteingangsgehäuses (24) in eine Außenluft-Ansaugkammer (44) und eine Innenluft-Ansaugkammer (42) aufteilt.

2. Klimatisierungsanlage (3) nach Anspruch 1, wobei das Lufteingangsgehäuse (24) mindestens einen Außenlufteingang (19) zum Ansaugen eines Außenluftstroms (Fe) in das Wärmebehandlungsmodul (8) und mindestens einen Innenlufteingang (20) zum Ansaugen eines Innenluftstroms (Fi) in das Wärmebehandlungsmodul (8) aufweist.

3. Klimatisierungsanlage (3) nach Anspruch 2, wobei das Lufteingangsgehäuse (24) zwei Außenlufteingänge (19) und einen einzigen Innenlufteingang (20) aufweist.

4. Klimatisierungsanlage (3) nach Anspruch 3, wobei der einzige Innenlufteingang (20) zwischen den zwei Außenlufteingängen (19) gemäß einer Querrichtung (z) angeordnet ist.

5. Klimatisierungsanlage (3) nach einem der Ansprüche 2 bis 4, wobei das Lufteingangsgehäuse (24) mindestens eine Wähleinrichtung (32) aufweist, die ein Ansaugen des Innenluftstroms (Fi) und/oder des Außenluftstroms (Fe) in das Wärmebehandlungsmodul (8) erlauben kann.

6. Klimatisierungsanlage (3) nach Anspruch 5, wobei die Wähleinrichtung (32) aus mindestens einer Klappe (34, 36) besteht, die das Öffnen und/oder Schließen des Außenlufteingangs (19) und/oder des Innenlufteingangs (20) ermöglichen kann.

7. Klimatisierungsanlage (3) nach Anspruch 6, wobei die Wähleinrichtung (32) mindestens eine Außenlufteingangsklappe (34), die den Außenlufteingang (19) öffnen bzw. schließen kann, und mindestens eine Innenlufteingangsklappe (36) aufweist, die den Innenlufteingang (20) öffnen bzw. schließen kann.

8. Klimatisierungsanlage (3) nach Anspruch 7, wobei die Außenlufteingangsklappe (34) und die Innenlufteingangsklappe (36) auf einer gleichen Drehachse (40) angeordnet sind.

9. Klimatisierungsanlage (3) nach Anspruch 7 oder 8, wobei die Wähleinrichtung (32) zwei Außenlufteingangsklappen (34) und eine einzige Innenlufteingangsklappe (36) aufweist.

10. Klimatisierungsanlage (3) nach Anspruch 9, wobei die einzige Innenlufteingangsklappe (36) zwischen den zwei Außenlufteingangsklappen (34) gemäß einer Querrichtung (z) angeordnet ist.

11. Klimatisierungsanlage (3) nach einem der Ansprüche 7 bis 10, wobei die Außenlufteingangsklappe (34) und die Innenlufteingangsklappe (36) Klappen von der Art "Drosselklappe" sind.

12. Klimatisierungsanlage (3) nach einem der vorhergehenden Ansprüche, wobei das Lufteingangsgehäuse (24) zwei innere Trennwände (38) aufweist, die das Innenvolumen des Lufteingangsgehäuses (24) in zwei Außenluftansaugkammern (44) und eine einzige Innenluftansaugkammer (42) aufteilen.

13. Klimatisierungsanlage (3) nach Anspruch 12, wobei die einzige Innenluftansaugkammer (42) zwischen den zwei Außenluftansaugkammern (44) gemäß einer Querrichtung (z) angeordnet ist.

## Claims

1. Thermal conditioning installation (3) for a motor vehicle, which is suitable for permitting an aerothermic preparation of a flow of air intended to be diffused in a cabin (H) of the vehicle, comprising at least one thermal processing module (8) that is suitable for thermally processing the flow of air, comprising at least one air inlet housing (24) for admitting the flow of air into the thermal processing module (8) and a motor fan unit (18) for circulating the flow of air in the thermal processing module (8), and a distribution module (9) for distributing the flow of air, making it possible to distribute the flow of air leaving the thermal processing module (8) into various regions of the cabin (H), the thermal processing module (8) being intended to be arranged in a forward compartment (A) of the vehicle and the distribution module (9) being intended to be arranged in the cabin (H), the thermal processing module (8) and the distribution module being two distinct and separate subassemblies, **characterized in that** the air inlet housing (24) is arranged above the motor fan unit (18), in a vertical direction (y) with reference to an orthonormal reference system (x, y, z) in which the x-direction defines a longitudinal direction, the y-direction defines a vertical direction and the z-direction defines a transverse direction, and **in that** the air inlet housing (24) comprises at least one internal partition (38) that divides the interior volume of the air inlet housing (24) into an external air admission chamber (44) and an internal air admission chamber (42).

2. Thermal conditioning installation (3) according to Claim 1, in which the air inlet housing (24) comprises at least one external air inlet (19) for admitting a flow of external air (Fe) into the thermal processing module (8), and at least one internal air inlet (20) for admitting a flow of internal air (Fi) into the thermal processing module (8).

3. Thermal conditioning installation (3) according to Claim 2, in which the air inlet housing (24) comprises two external air inlets (19) and a single internal air inlet (20).

4. Thermal conditioning installation (3) according to Claim 3, in which the single internal air inlet (20) is arranged between the two external air inlets (19), in a transverse direction (z).

5. Thermal conditioning installation (3) according to any one of Claims 2 to 4, in which the air inlet housing (24) comprises at least one selection means (32) which is suitable for allowing admission of the internal air flow (Fi) and/or of the external air flow (Fe) into the thermal processing module (8).

6. Thermal conditioning installation (3) according to Claim 5, in which the selection means (32) consists of at least one flap (34, 36), which is suitable for allowing the opening and/or the closing of the external air inlet (19) and/or of the internal air inlet (20) .

7. Thermal conditioning installation (3) according to Claim 6, in which the selection means (32) comprises at least one external air inlet flap (34) that is suitable for opening, and respectively closing, the external air inlet (19), and at least one internal air inlet flap (36) which is suitable for opening, and respectively closing, the internal air inlet (20) .

8. Thermal conditioning installation (3) according to Claim 7, in which the external air inlet flap (34) and the internal air inlet flap (36) are arranged on one and the same axis of rotation (40).

9. Thermal conditioning installation (3) according to Claim 7 or 8, in which the selection means (32) comprises two external air inlet flaps (34) and a single internal air inlet flap (36).

10. Thermal conditioning installation (3) according to Claim 9, in which the single internal air inlet flap (36) is arranged between the two external air inlet flaps (34), in a transverse direction (z).

11. Thermal conditioning installation (3) according to any one of Claims 7 to 10, in which the external air inlet flap (34) and the internal air inlet flap (36) are of the "butterfly" flap type.

12. Thermal conditioning installation (3) according to any one of the preceding claims, in which the air inlet housing (24) comprises two internal partitions (38) dividing the internal volume of the air inlet housing (24) into two external air admission chambers (44) and one single internal admission chamber (42).

13. Thermal conditioning installation (3) according to Claim 12, in which the single internal air admission chamber (42) is arranged between the two external air admission chambers (44) in a transverse direction (z) .
